# EUROPEAN PATENT SPECIFICATION

(11) **EP 3 490 072 B1**
(45) Date of publication and mention of the grant of the patent: **19.01.2022**
(21) Application number: 17203905.9
(22) Date of filing: 27.11.2017
(51) Int. Cl.: H01R 4/36, H01R 4/30, F16B 31/02

(54) **SHEAR-OFF SCREW FOR FASTENING A CONDUCTOR OF AN ELECTRIC CABLE IN A CONNECTING ELEMENT**
ABSCHERSCHRAUBE ZUR BEFESTIGUNG EINES LEITERS EINES STROMKABELS IN EIN VERBINDUNGSELEMENT
VIS À CISAILLEMENT SERVANT À FIXER LE CONDUCTEUR D'UN CÂBLE ÉLECTRIQUE DANS UN ÉLÉMENT DE CONNEXION

(43) Date of publication of application: 29.05.2019
(73) Proprietor: NKT HV Cables AB, 44138 Alingsås (SE)
(72) Inventor: Batkovic, Josip, 44144 Alingsås (SE); Lichy, Radim, 44191 Alingsås (SE)
(74) Representative: Kransell & Wennborg KB

(56) References cited:
- DE-A1-102015 102 223

## Description

The present invention relates to a shear-off screw, according to claim 1.

Shear-off screws are known from many fields of technology and are used, for example, when objects are to be fastened by clamping to another object. Such shear-off screws are also used in the field of screw connection technology in power engineering applications, for example in medium-voltage applications, where conductor ends of electrical cables are to be electrically connected to one another, to other devices, to bus bars or the like. For this purpose, connecting elements are known, which may be formed, for example, in the manner of a hollow cylinder, in which the conductor ends of each cable can be inserted. For attachment of the conductor in the connecting element, tapped holes are provided in the connecting element, into which the shear-off screws can be screwed. In order to avoid damages of other parts, for example due to sharp edges, it is required that the shear-off screws shear off at a specific position near the upper surface of the connecting element, in particular in such a way that the screw residues do not project beyond the surface of the connecting element.

Such a shear-off screw is known, for example, from EP 2 071 201 B1. The shear-off screw disclosed there has, at least in sections, a hollow-cylindrical threaded portion, which can be screwed into the tapped holes of a connecting element. The operation of the shear-off screw is carried out by an actuating screw, which can be screwed into the shear-off screw from above via a borehole at the top with internal thread. When exceeding a predetermined torque shearing off takes place.

Such shear-off screws have proven to work quite well, however, due to their structure and functionality but also in terms of costs incurred, in particular due to the required auxiliary means, such as actuating screws, they have proven to be rather disadvantageous. In addition, it is often difficult to transfer the required forces by means of the internal thread, which is why the screwing cannot always be reliably guaranteed. Furthermore, it has proven to be disadvantage that the shearing-off cannot be carried out in a stepless manner, resulting in a rather bad breaking capability of the shear-off screw. Therefore, especially in cases of different connector and/or conductor sizes the shearing-off will take place outside the tapped hole, resulting in sharp protruding pieces above the connecting element surface. DE 10 2015 102223 A1 discloses another example of a shear-off screw.

Against this background, the invention has for its **object** to provide a shear-off screw, which has improved shear-off capabilities while at the same time is favorable in terms of production.

In a shear-off screw of the aforementioned type, the object **is achieved** with the features of claim 1.

By means of a shear-off screw designed in this way, the shear-off behavior can be improved in a simple manner. The torsional and tensile forces required for the shearing-off operation can be easily transmitted by means of the pressure piece to the remaining regions of the screw and in particular to the threaded portion. Due to the axial excess length of the pressure piece the threaded portion does not get directly into contact with the conductor to be fastened and therefore, for example, is not exposed to head friction, so that the threaded portion can be adjusted as needed to the respective shear-off properties. Therefore, the shear-off characteristics of the shear-off screw can overall be improved advantageously. In addition, it is not necessary to provide additional auxiliary means, such as screw elements, via which the required tensile forces can be applied to the conductor. Overall, the structure of the shear-off screw can be significantly simplified. Furthermore, a stepless screw having a good braking capability can be achieved. In addition, the shear-off properties can be better controlled, making the shear-off screw less susceptible to errors.

An advantageous embodiment in this context provides that the threaded portion has at least partially an external thread. By means of the external thread, the shear-off screw can be screwed into the connecting element and in particular into the tapped holes of the connecting element. For this purpose, the tapped holes in the connecting element may have corresponding threads, in which the threaded portion of the shear-off screw can engage. In this case, it has proven to be particularly advantageous if the entire hollow-cylindrical threaded section has an external thread on its outer surface. However, embodiments are also possible, in which the external thread is provided only in partial regions of the hollow-cylindrical threaded portion.

Furthermore, it has proven to be particularly advantageous, in particular in terms of design, when the threaded portion is formed in the manner of a thin-walled threaded sleeve. Since the threaded portion does not get into direct contact with the conductor, the threaded portion is only subjected to low forces, so that the wall thicknesses of the threaded portion can be reduced to an advantageous level, further positively adjusting the shear-off characteristics. The wall thickness of the hollow-cylindrical threaded portion may preferably have a thickness between 0,05 millimeter and 10 millimeters, more preferably between 0,5 and 4 millimeters, and particularly preferably in the range between 0,5 and 3 millimeters. It is thus possible by adjusting the wall thickness as needed, to change the torque or force to be applied at which the shearing-off will take place. Depending on the choice of the material of the threaded portion, the shear-off behavior can be additionally influenced. In this context, it has proven to be particularly advantageous, when the shear-off screw, in particular the threaded portion, is made of metal and/or electrically conducting. Other materials, such as ceramics or the like are also conceivable.

In a further embodiment of the invention, it is proposed that the threaded portion is formed integrally with a screw head, via which the screw is screwed into the connecting element. The screw head can preferably be designed in such a way that a tool can be attached to it and the shear-off screw can be screwed into the connecting element. For this purpose, the screw head can, for example, act as a socket with an inner profile in via which a tool can engage, for example in the form of an internal hexagon socket or the like or have an outer shape to which a tool can be attached, such as an external hexagon socket or the like. Especially, the use of, for example, a hex or torx screw-head has proven to be particularly advantageous. The underside of the screw head can preferably be firmly connected to the upper side of the hollow-cylindrical threaded portion, so that overall a U-shaped profile of the shear-off screw can be realized.

According to the invention the pressure piece is formed in two parts with a plunger and a clamping element. Such a configuration can be advantageous in particular in terms of the pressure distribution after the shearing-off of the screw has taken place, since the stress applied does not only act on the threaded portion but rather over the entire surface of the clamping element. It is preferred, if the plunger is arranged in the manner of an intermediate element between the screw head of the shear-off screw and the clamping element. The pressure piece, and in particular the plunger, can preferably be designed such that an upward force is exerted on the screw head, in particular when the plunger is in contact with the clamping element when the screw is tightened. Via the clamping element frictional forces occurring between the shear-off screw and the conductor, in particular, the head friction can be reduced and thus damage to the conductor can be prevented. Particularly preferably, the plunger and / or the clamping element can have a shape, which further improves the properties of the shear-off screw, in particular the force-generating properties. For example, embodiments are conceivable, in which the underside of the plunger is formed beveled, spherical, concave or the like. In this regard it has proven to be particularly preferred if the upper side of the clamping element has a shape corresponding to the shape of the underside of the plunger, so that the plunger and the clamping element can engage with each other in a simple manner.

It is also advantageous, if the pressure piece, in particular the plunger, is formed integrally with the screw head or as a separate component. A one-piece design provides the advantage that manufacturing tolerances can be minimized and manufacturing costs can be reduced. When using a separate component, there is the advantage that the pressure piece, in particular the plunger, can be easily adapted according to different requirements and in this respect, has a higher variability.

In this context, it has proven to be particularly advantageous if the pressure piece, in particular the plunger, is designed as a cylinder, in particular as a hollow cylinder. Alternatively, however, embodiments are also possible in which the pressure piece, in particular the plunger, is shaped differently, such as, for example, in the manner of a cuboid and/or solid, partially hollow or the like. In one embodiment of the plunger as a separate component, the plunger can also be made of a different material than the other parts of the shear-off screw. In particular, the plunger can be reusable, therefore further reducing the production costs. The pressure piece, in particular the plunger, may preferably have a diameter which is smaller than the inner diameter of the hollow-cylindrical threaded portion, so that there is an intermediate space between the outside of the pressure piece and the inside of the threaded portion.

Furthermore, it is beneficial if the clamping element is at least partially arrangeable between the conductor and the threaded portion. By arranging the clamping element between the conductor and the threaded portion or in particular between the conductor and the plunger frictional forces between the shear-off screw and the conductor can further be reduced and a reliable attachment of the conductor can be realized without pressure loss during shearing-off. The clamping element may in particular be designed such that it is pressed against the conductor surface when tightened, without incurring high frictional forces on the conductor surface and in particular on the conductor strands. The resulting frictional forces may instead be relocated into the transition region of the clamping element and the plunger so that a deformation or damage to the conductors can be prevented. For this purpose, in particular, the underside of the clamping element can be designed to have such a texture by which the coefficient of friction is adjustable. It has proven to be particularly advantageous if the underside of the clamping element is smooth. Alternatively, however, profilings can be provided.

In mechanical terms, it has proven to be advantageous if, before screwing the shear-off screw into the connecting element there exists a gap between the underside of the threaded portion and the clamping element. The gap may result in particular due to the axial excess length of the pressure piece in respect to the threaded portion. By providing a gap between the underside of the threaded portion and the clamping element, the walls of the threaded portion can be further relieved, thus ensuring a simple and reliable screwing. In this way, for example, deformations or damage can be prevented. In addition, at the same time, there is the possibility that the shear-off screw is in contact with the conductor by means of the clamping element and the plunger and thus a tensile / compressive force can be build up. However, it is particularly preferred if the gap is as small as possible. In this case, a gap width in the range between 0.1 and 2 millimeters, particularly preferably in the range between 0.1 and 0.5 millimeter, has proven to be particularly advantageous. In this way, it can be ensured that the conductor does not spring back after shearing-off of the screw, hindering a loss of fastening pressure. Instead, the pressure exerted on the conductor pressure can be reliably maintained.

According to a further preferred embodiment, the clamping element is formed in the manner of a cap, with an engaging element adapted to engage with the inside of the threaded portion and a contact element adapted to engage with the conductor. Preferably, the engaging element can be configured such that it can engage with the inside of the hollow-cylindrical threaded portion. In that regard, it is preferred if the engaging element has a diameter which is smaller than the inner diameter of the threaded portion. It has proven to be particularly advantageous if the engaging element is also circular. However, other embodiments are also conceivable. It is further preferred if the engaging element has a larger diameter than the plunger does. Alternatively, however, the diameters may also be the same size or the diameter of the engaging element may be smaller than that of the pressure piece. The plunger facing surface of the engaging element can be even or profiled. An even surface is preferred since in that case the frictional forces can be further reduced. Alternatively, or additionally, the plunger facing side of the engaging element may be formed beveled and, for example, have an inclination in the range between 5° and 45°. In this context, it is particularly preferred if the plunger is shaped correspondingly to the engaging element. The contact element can in turn get into contact with the conductor. For this purpose, the surface facing the conductor may be even or profiled. However, it is particularly advantageous if the side facing the conductor may be formed in such a way that frictional forces acting on the conductor can be minimized.

In a constructive manner, it has also proven to be advantageous if the engaging element and the contact element are arranged in steps, wherein the diameter of the engaging element is smaller than the diameter of the contact element. In this way, a step can be created, by means of which it can be prevented that the clamping element slips out of the screw after being torn off. After the shearing-off, in particular the underside of the threaded section can then rest flat on the stepped region of the contact element. The engaging element can then be located completely inside the threaded portion.

Advantageously, an upward force can be generated by the pressure piece on the screw head when screwing the threaded portion into the connecting element, in particular by the interaction of the clamping element and the plunger. By means of the pressure piece, in particular the plunger, on the one hand a downward force on the conductor of the electric cable can be applied for fastening, in particular for clamping, when screwing the shear-off screw. In turn, a counter force can be applied on the screw head, which can influence the shear-off behavior. In this way, the required torsion and / or tensile forces for the shearing-off can be applied, which can lead to an improved shear-off. Due to the upward force applied, the shearing-off behavior can be further influenced and the shearing-off process can be improved. Sharp edges or the like can be prevented.

It is also particularly preferred if the inside of the threaded portion has profilings. Especially advantageous can be the use of horizontal and / or longitudinal grooves. By providing horizontal grooves, the shear-off behavior can further advantageously be influenced and thus a type of predetermined breaking points can be generated. In this way, in particular sharp edges or an undefined shearing-off can be prevented. The longitudinal grooves can be particular advantageous in view of unscrewing. For this purpose, for example, special tools can be used, which allow unscrewing. In this case, the tool can engage with the grooves and the previously tightened screw can be loosened. Furthermore, in view of the breaking capability of the shear-off screw, it has proven to be particularly advantageous if the depth of the grooves increases in the direction of screwing. Therefore, the grooves in the region of the screw head can have a smaller depth than in the end region of the screw, in particular in the region of the screw-head. This may result in a higher wall thickness in the region screw head and/or a smaller wall thickness in the region of the end region of the screw. By having a thicker wall in the upper part of the screw than in the lower part, the breaking will therefore always tend to occur at the lower part, especially in the region of lower wall thickness, resulting in that the breaking will tend to occur as close as possible to the tapped hole.

Further details and advantages of the invention will be explained in more detail with reference to the embodiments illustrated in the drawings. Herein shows:
- Fig. 1: a schematic sectional view of a connecting element of an example not forming part of the invention;
- Fig. 2: a perspective sectional view of an example not forming part of the invention of a shear-off screw;
- Fig. 3: a schematic sectional view of a connecting element with a shear-off screw according to a first embodiment;
- Fig. 4: a perspective sectional view of a first embodiment of a shear-off screw;
- Fig. 5: a sectional view of a second embodiment of a shear-off screw;
- Fig. 6: a schematic sectional view of a connecting element with a shear-off screw according to a third embodiment;
- Fig. 7: a perspective sectional view of a third embodiment of a shear-off screw;
- Fig. 8: a perspective sectional view of a shear-off screw with vertical profilings;
- Fig. 9: a perspective sectional view of a shear-off screw with horizontal profilings.

Shear-off screws 1 have been known from many areas of technology. Among others, shear-off screws 1 can also be used, for example, in power engineering applications and especially in medium-voltage applications to connect electrical conductors 2 of several cables that are not shown in more detail, in order to create a mechanically and/or electrically durable connection. An advantage of such shear-off screws 1 is that the actual screw connection is not visible from the outside at a later point in time and in particular that the shear-off screw 1 does not protrude beyond the outside of the connecting element 3 after shearing-off. For fastening, and in particular for clamping, the conductor 2, the shear-off screws 1 can be screwed into tapped holes 4 of the connecting element 3 by means of an auxiliary tool, such as a torque wrench or the like, whereby the screw 1 shears-off when a specific torque T is exceeded. Therefore, only the lower part of the shear-off screw 1 remains in the connecting element 3.

However, conductor 2 is held inside the connecting element 3 by means of a specified contact pressure.

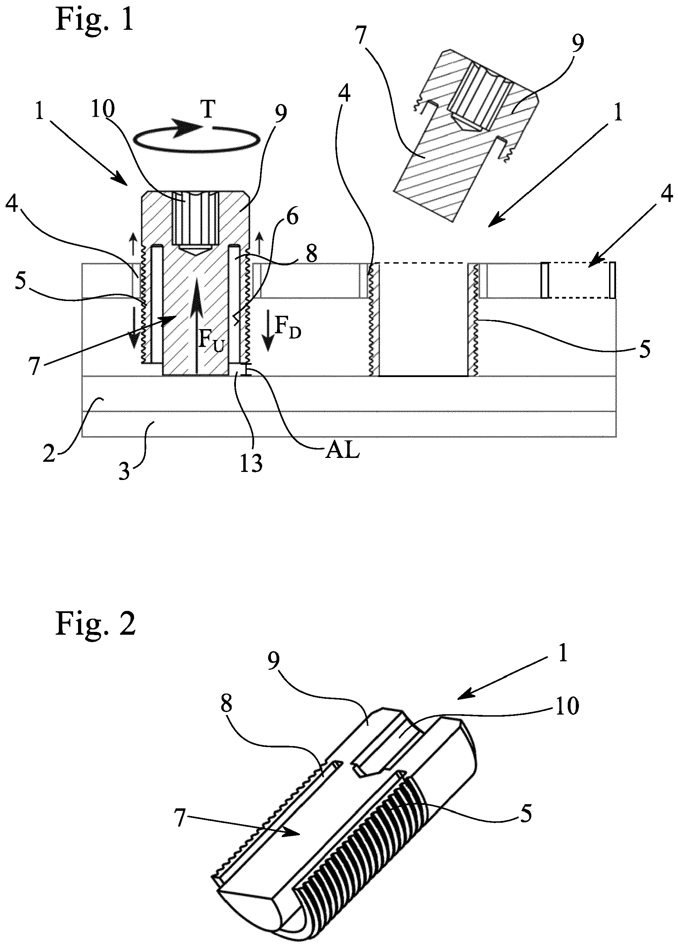

In Fig. 1 there is shown a sectional view through such a connecting element 3, by means of which conductors 2 of electrical cables can be connected to each other. The connecting element 3 has three tapped holes 4, wherein only in the first two tapped holes 4 there is screwed in a shear-off screw 1. Depending on the application requirements, however, other configurations are also possible, for example with one, two or more tapped holes 4.

An example not forming part of the invention of a shear-off screw 1 in the mounted state is shown on the left side of the Fig. 1 in the left-sided tapped hole 4. A detailed view of this screw 1 shows Fig. 2. The inventive shear-off screw 1 has a hollow-cylindrical threaded portion 5 with an external thread which can engage with the tapped hole 4 and by means of which the shear-off screw 1 can be screwed into the connecting element 3. The threaded portion 5 is formed as a thin-walled threaded sleeve, whereby the wall thickness of threaded portion 5 lies in the range of a few millimeters. In particular, the wall thickness of the hollow-cylindrical threaded portion 5, for example, can have a thickness of between 0,05 millimeter and 10 millimeters, especially preferably between 0,5 and 4 millimeters, and particularly preferably between 0,5 and 3 millimeters. The wall thickness can be used to adjust the torque T required for the shear-off process. Therefore, the threaded portion 5, in particular the thin wall of the threaded portion 5, is of high relevance for the breaking capability of the screw 1.

As can be further seen from Fig. 1 and 2, the threaded portion 5 is formed integrally with a screw head 9. The screw head 9 is primarily used as a point of contact for a tool, such as a torque wrench, so that the shear-off screw 1 can be screwed in via this tool. The screw head 9 is essentially formed as a solid body, in which an inner profile 10 is embedded, for example in the form of an internal hexagon. A corresponding tool can be inserted into the inner profile 10, for example, by means of such as a screwdriver or the like, and thus the shear-off screw 1 can be tightened. The use of a screw head 9 with an inner profile 9 is advantageous since it cannot only be arranged in the area of the screw head 9 itself, but can also protrude deeper into the threaded portion 5. In this way, the point of contact of the tool can be moved further down in the direction of the conductor 2, which results in a simplification the screwing process. Alternatively, the screw head 9 can also be designed in the form of an external hexagon or the like. Hex or Torx screw heads 9 have proven to be particularly suitable.

In order to be able to apply the tensile load required for the shear-off process onto the shear-off screw 1 and in particular to screw head 9 and threaded portion 5, a pressure piece 7 is arranged inside the threaded portion 5, by means of which on the one hand a downward force F_{D} and on the other hand an upward counter force Fu can be applied. Therefore, the functionality of the pressure piece 7 is to create an upward force Fu when the screw 1 is tightened. As shown in Fig. 1 and 2, the shear-off screw 1 according to the first embodiment has a pressure piece 7, which is formed integrally with the screw head 9 of shear-off screw 1. The pressure piece 7 is designed as a cylinder, which can be hollow, solid or at least partly hollow. Alternatively, however, pressure piece 7 can also have any other shape and be designed, for example, as a cuboid or the like. The outer diameter of the pressure piece 7 is in total smaller than the inner diameter of the threaded portion 5, thus creating a hollow interspace 8 between the inner side 6 of the threaded portion 5 and the outer surface of the pressure piece 7, which causes in particular a decoupling of the pressure piece 7 and the threaded portion 5.

In addition, pressure piece 7 has an axial excess length AL in respect to threaded portion 5. Thus, a gap 13 between the conductor 2 and the threaded portion 5 is created, which ensures that the thin-walled threaded portion 5 does not get into direct contact with conductor 2. In this way, it is possible, for example, to prevent kinking or shearing during the screwing process and thus damage of threaded portion 5.

If the shear-off screw 1 is now screwed into the tapped hole 4, threaded portion 5 is rotated in the direction of the conductor 2. At a certain point, the pressure piece 7 reaches conductor 2, thus generating an upward force Fu on the screw head 9. At the same time, a torque T is applied to screw 1 via the rotary motion of screw 1. At a certain point a specified torque T is exceeded, which causes the shear-off screw 1 to tear off. By choice of the material of the individual areas of screw 1, the material thickness, e.g. threaded portion 5 and the like, the shear-off behavior can be influenced.

The shear-off procedure is shown exemplary in Fig. 1 in the middle. As can be seen there, screw 1 tears off particularly in the shear-off region of threaded portion 5, wherein the lower part of threaded portion 5 remains in tapped hole 4 and ensures a secure hold of conductor 2 inside the connecting element 3. The upper part, in particular the screw head 9 and the pressure piece 7 as well as in some cases parts of the threaded portion 5, are detached from the rest of screw 1 after being sheared off and can be removed. The gap 13 is then no longer present after the break-off, as the pressure exerted on it by means of pressure piece 7 until now on conductor 2 is released. The gap 13 should be designed to be as minimal as possible and in particular in such a way, that before breakoff due to elongation and/or compression of the materials the gap 13 will be closely to 0 mm so that a spring back of the conductor and/or a loss of pressure can nearly be eliminated. At this point in time, threaded portion 5 is in contact with conductor 2.

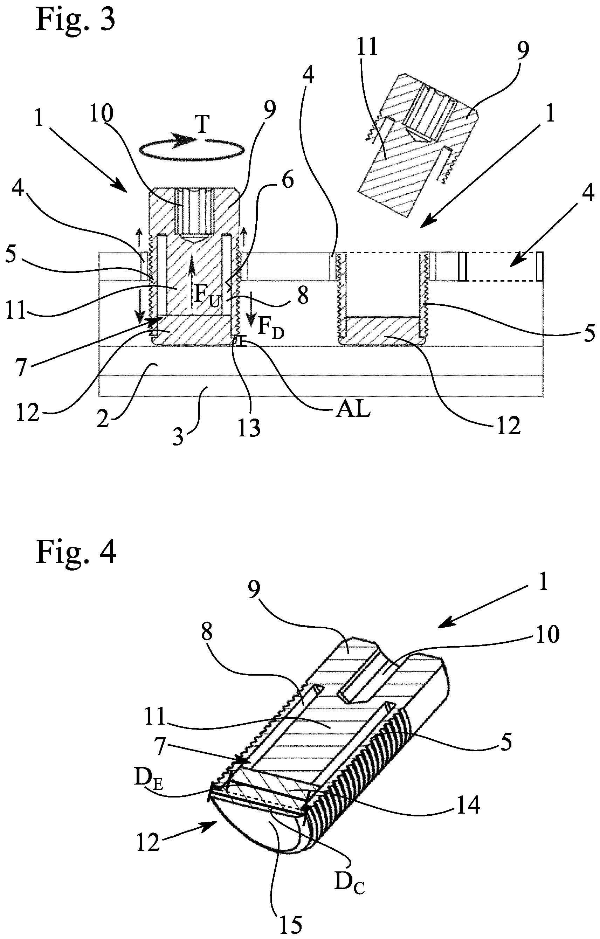

In Fig. 3 and 4, a first embodiment of a shear-off screw 1 is shown. The shear-off screw 1 is essentially identical to the shear-off screw 1 and is based in particular on the same principle of operation as already described with regard to the example not forming part of the invention above. In this respect, the same remarks apply as already stated for the example not forming part of the invention according to Fig. 1.

The shear-off screw 1 according to the first embodiment differs essentially from the example not forming part of the invention of Figures 1 and 2 in that the pressure piece 7 has a different design. According to the example not forming part of the invention seen in Figures 1 and 2 pressure piece 7 was designed in one piece. In the case of the pressure piece 7 according to the first embodiment, it is formed of two parts with a plunger 11 and a clamping element 12. Such a design has the advantage that the forces acting on screw 1 Fu, F_{D} and in particular, the forces acting on threaded portion 5 can be better distributed.

In accordance with the first embodiment of shear-off screw 1, the plunger 11, similar to the entire pressure piece 7 in accordance with the example not forming part of the invention of Figures 1 and 2 is designed in one piece with screw head 9 of screw 1. Here too, the plunger 11 can be designed as a cylinder or any other type and be a hollow, solid or partially hollow body. The plunger 11 is in total shorter than the threaded portion 5, thus creating a space between the underside of the plunger 11 and the underside of the threaded portion 5, in which the clamping element 12 can engage.

Clamping element 12 is a cap 14 with an engaging element 14 and a contact element 15, which is arranged at least partly between conductor 2 and threaded portion 5. Engaging element 14 is used to engage with the inside 6 of the threaded portion 5 and in particular with the space between the plunger 11 and the conductor 2. The contact element 15, on the other hand, directly faces conductor 2.

The engaging element 14 and contact element 15 are arranged against each other in steps. The diameter D_{E} of the engaging element 14 is smaller than the diameter Dc of the contact element 15. The diameter Dc of the contact element 15 on the contrary is larger than the inner diameter of the threaded portion 5, but preferably smaller than the outer diameter of the threaded portion 5, so that an assembly can be achieved in which, after the screw 1 has been torn off, the underside of the threaded portion 5 is in contact with the upper side of the contact element 15, i. e. the step of the clamping element 12. In this way, it is possible to prevent the clamping element 12 from slipping through the cavity of the threaded portion 5 after the screw 1 has been torn off, thereby also preventing the conductor 2 from springing back unintentionally. The side of contact element 15 facing conductor 2 is designed smooth so that the friction coefficient can be minimized. Alternatively, however, it is also possible to design the contact element 15 with profilings or the like on the side of the contact element 15 facing conductor 2.

The engaging element 14 however has a diameter D_{E} that is smaller than the inner diameter of the threaded portion 5, so that the engaging element 14 can engage with the cavity of the threaded portion 5. However, it is preferable if the diameters are approximately the same, so that only a very small gap between the engaging element 14 and the inside 6 of the threaded portion 5 results. The height of the contact element 14 lies between half the length and one fifth of the length of threaded portion 5, in particular in the range of one third. The inwardly directed upper side of the engaging element 14 is also smooth. However, designs are also conceivable, where the upper side of engaging element 14 is structured.

As can be seen from Fig. 3 and especially also from Fig. 4, the pressure piece 7 also has an axial excess length AL in respect to the threaded portion 5. The total length of the pressure piece 7 results in particular from the addition of the length of the plunger 11 and the length of the clamping element 12, in particular the axial excess length AL is realized by the clamping element 12. Due to the axial excess length AL of pressure piece 7, a gap 13 is also created in the second embodiment between the threaded portion 5 and in particular the bottom side of the threaded portion 5 and the conductor 2 and especially the top side of the contact element 15. This ensures that when screwing screw 1 into tapped hole 4, no damage to the thin-walled threaded portion 5 is caused. During the screwing process, however, this gap 13 is approximately eliminated, so that at the time of shearing, threaded portion 5 is essentially in contact with the step of clamping element 12. This is particularly evident in the right-hand area of the Fig. 3.

Regarding the design of the plunger 11 and/or the clamping element 12 it is in general conceivable that the plunger 11 and / or the clamping element 12 can have a shape, which further improves the properties of the shear-off screw 1, in particular the force-generating properties. For example, embodiments are conceivable, in which the underside of the plunger 11 is formed beveled, spherical, concave or the like. In this regard it has proven to be particularly preferred if the upper side of the clamping element 12 has a shape corresponding to the shape of the underside of the plunger 11, so that the plunger 11 and the clamping element 12 can engage with each other in a simple manner.

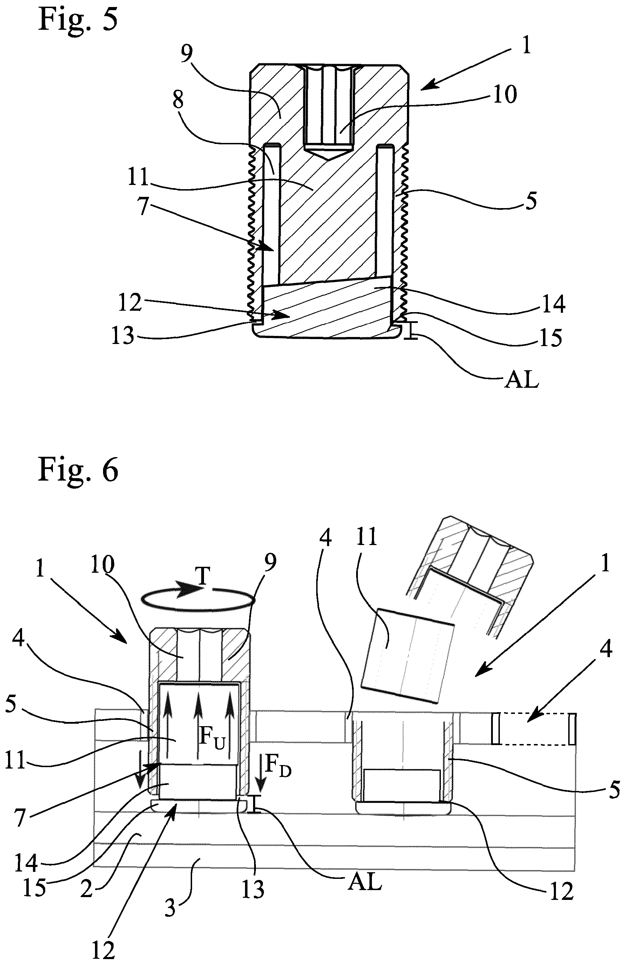

In Fig. 5, a second embodiment of such a shear-off screw 1 is shown. The basic design also corresponds to the first embodiment of the shear-off screw 1, whereas the second embodiment differs substantially from the first embodiment in that the plunger 11 and the clamping element 12 are designed in general in the same way as the first embodiment, but the bottom side of the plunger 11 and/or the top side of the clamping element 12 are beveled. Preferred is when the angles of the two bevels correspond to each other. In this case, the plunger 11 and the clamping element 12 can be aligned so that the two surfaces lie flat against each other before screwing in. In particular, there can then be no gap 13 between the bottom side of threaded portion 5 and contact element 15 of clamping element 12. When screwing in the shear-off screw 1, the plunger 11 is then turned, whereas the clamping element 12 is detached from this movement and therefore remains in position. In this way, the beveled surfaces are twisted against each other, which causes the clamping element 12 to be pressed in the direction of conductor 2 and the plunger 11 to be pressed in the direction of the screw head 9, resulting in a gap 13 between the threaded portion 5 and the contact element 15.

A third embodiment of a shear-off screw 1 is shown in Fig. 6. In accordance with the third embodiment, the pressure piece 7 is also designed in two parts, but here the plunger 11 is not integrally formed to screw head 9. Instead, the plunger 11 is designed like a cylinder, in particular a hollow cylinder, which is arranged loosely as a separate component in the inside of threaded portion 5. In addition to the plunger 11, a clamping element 12 is also provided, which is arranged between the threaded portion 5 and the conductor 2. Otherwise, the same remarks apply as those already stated in connection with the other embodiments. After the screw 1 has been sheared off, the plunger 11 and the upper part of screw 1 can be removed separately from each other.

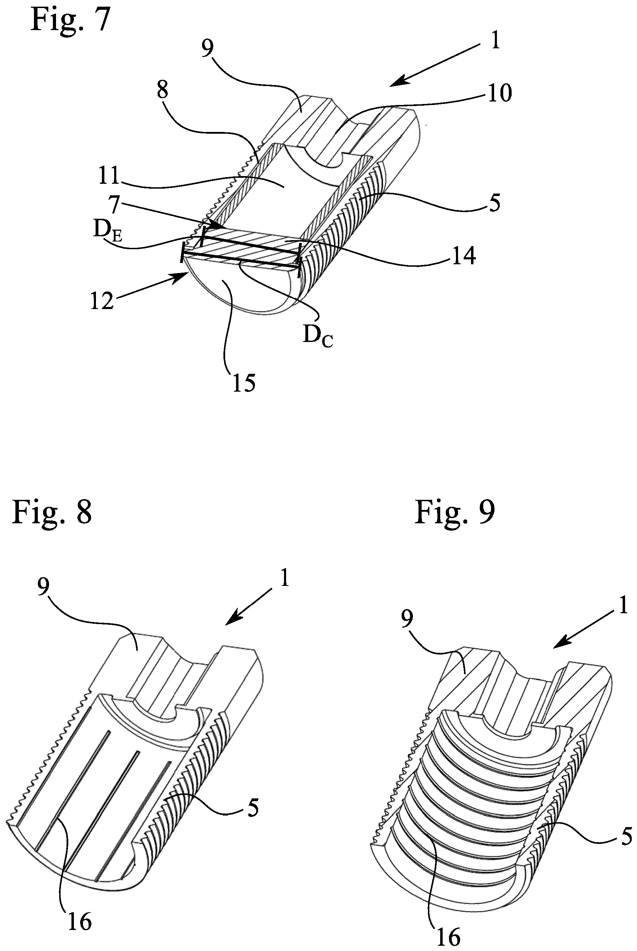

To further improve the shear-off behavior of the shear-off screw 1, profilings 16 may be provided on the inside 6 of the threaded portion 5. Corresponding profilings 16 are shown in Fig. 8 and 9. In Fig. 8 there are shown profilings 16 that are provided on the inside 6 of the threaded portion 5 in the form of longitudinal grooves. These profilings 16 can be used in particular for the subsequent unscrewing of the shear-off screw 1 after shearing off. For example, a tool can be used to engage with the grooves in order to unscrew the torn screw 1 out of tapped hole 4. It is particularly preferred when the depth of the grooves 16 decreases in the direction of the screw head 9. In this respect, the depths of profilings 16 at the bottom of threaded portion 5 is greater than in the area of screw head 9.

In Fig. 9, on the other hand, the profilings 16 are designed as horizontal profilings 16, in particular as horizontal grooves. Corresponding profilings 16 further improve the shear-off behavior of shear-off screw 1. In particular, the profilings 16 can be used as predetermined breaking points, which means that a defined shear-off behavior can be achieved over all. Sharp edges can thus be avoided.

With a shear-off screw 1 according to the present invention, it is easy to achieve a reliable fastening of one or more conductors 2 of electrical cables in a connecting element 3. In particular, conductors 2 with different diameters can also be connected together. With the aid of a pressure piece 7, a downward force F_{D} can be applied to the conductor 2 and an upward force Fu can be generated on screw head 9 of screw 1. In this way, the shear-off screw 1 can be stressed both on tension and on torsion, whereby a stepless shear-off screw 1 can be realized. Overall, the shear-off behavior can be improved and sharp edges or the like can be prevented. In addition, it is not necessary to provide additional auxiliary means such as actuating screws or the like.

### Reference Numerales:

- 1: Shear-off screw
- 2: Conductor
- 3: Connecting element
- 4: Tapped hole
- 5: Threaded portion
- 6: Inside of the threaded portion
- 7: Pressure piece
- 8: Hollow interspace
- 9: Screw-head
- 10: Inner profile
- 11: Plunger
- 12: Clamping element
- 13: Gap
- 14: Engaging element
- 15: Contact element
- 16: Profilings

- D_{E}: Diameter of the engaging element
- D_{C}: Diameter of the contact element
- Fu: Upward force
- F_{D}: Downward force
- T: Torque
- AL: Axial excess length

## Claims

1. Shear-off screw, for fastening a conductor (2) of an electric cable in a connecting element (3), with a hollow-cylindrical threaded portion (5), in which the shearing off takes place when a predetermined torque (T) is exceeded and a pressure piece (7) arranged inside the threaded portion (5),
wherein the pressure piece (7) has an axial excess length (AL) with respect to the threaded portion (5),
**characterized in that**
the pressure piece (7) is formed in at least two parts: with a plunger (11) and a clamping element (12).

2. Shear-off screw according to claim 1, **characterized in that** the threaded portion (5) has at least partially an external thread.

3. Shear-off screw according to one of the preceding claims, **characterized in that** the threaded portion (5) is formed in the manner of a thin-walled threaded sleeve.

4. Shear-off screw according to one of the preceding claims, **characterized in that** the threaded portion (5) is formed integrally with a screw head (9), via which the screw (1) is screwed into the connecting element (3).

5. Shear-off screw according to any of the preceding claims, **characterized in that** the pressure piece (7), in particular the plunger (11), is designed as a cylinder, in particular as a hollow cylinder.

6. Shear-off screw according to any of the preceding claims, **characterized in that** the clamping element (12) is at least partially arrangeable between the conductor (2) and the threaded portion (5).

7. Shear-off screw according to any of the preceding claims, **characterized in that** before screwing the screw (1) into the connecting element (3) there exists a gap (13) between the underside of the threaded
portion (5) and the clamping element (12).

8. Shear-off screw according to any of the preceding claims, **characterized in that** the clamping element (12) is formed in the manner of a cap, with an engaging element (14) adapted to engage with the inside of the threaded portion (5) and a contact element (15) adapted to engage with the conductor (2).

9. Shear-off screw according to claim 8, **characterized in that** the engaging element (14) and the contact element (15) are arranged in 25 steps, wherein the diameter of the engaging element (D_{E}) is smaller than the diameter of the contact element (Dc).

10. Shear-off screw according to one of the preceding claims, **characterized in that** an upward force (F_{U}) can be generated by the pressure piece (7) on the screw-head (9) when screwing the threaded portion (5) in the connecting element (3), in particular by the interaction of the clamping element (12) and the plunger (11).

11. Shear-off screw according to one of the preceding claims, **characterized in that** the inside of the threaded portion (5) has profilings (16).

## Patentansprüche

1. Abscherschraube zur Befestigung eines Leiters (2) eines Stromkabels in einem Verbindungselement (3) mit einem hohlzylindrischen Gewindeabschnitt (5), bei dem das Abscheren bei Überschreiten eines vorgegebenen Drehmomentes (T) erfolgt und einem innerhalb des Gewindeabschnittes (5) angeordneten Druckstück (7),
wobei das Druckstück (7) eine axiale Überlänge (AL) in Bezug auf den Gewindeabschnitt (5) aufweist,
**dadurch gekennzeichnet, dass**
das Druckstück (7) aus mindestens zwei Teilen gebildet ist: einem Bolzen (11) und einem Klemmelement (12).

2. Abscherschraube nach Anspruch 1, **dadurch gekennzeichnet, dass** der Gewindeabschnitt (5) mindestens teilweise ein Außengewinde aufweist.

3. Abscherschraube nach einem der vorhergehenden Ansprüche, **dadurch gekennzeichnet, dass** der Gewindeabschnitt (5) in Form einer dünnwandigen Gewindehülse ausgebildet ist.

4. Abscherschraube nach einem der vorhergehenden Ansprüche, **dadurch gekennzeichnet, dass** der Gewindeabschnitt (5) einstückig mit einem Schraubenkopf (9) ausgebildet ist, über den die Schraube (1) in das Verbindungselement (3) eingeschraubt wird.

5. Abscherschraube nach einem der vorhergehenden Ansprüche, **dadurch gekennzeichnet, dass** das Druckstück (7), insbesondere der Bolzen (11), als Zylinder, insbesondere als Hohlzylinder, ausgelegt ist.

6. Abscherschraube nach einem der vorhergehenden Ansprüche, **dadurch gekennzeichnet, dass** das Klemmelement (12) mindestens teilweise zwischen dem Leiter (2) und dem Gewindeabschnitt (5) arrangierbar ist.

7. Abscherschraube nach einem der vorhergehenden Ansprüche, **dadurch gekennzeichnet, dass** vor dem Einschrauben der Schraube (1) in das Verbindungselement (3) ein Spalt (13) zwischen der Unterseite des Gewindeabschnitts (5) und dem Klemmelement (12) besteht.

8. Abscherschraube nach einem der vorhergehenden Ansprüche, **dadurch gekennzeichnet, dass** das Klemmelement (12) in Form einer Kappe ausgebildet ist, mit einem Eingriffselement (14), das angepasst ist, um in das Innere des Gewindeabschnitts (5) einzugreifen, und einem Kontaktelement (15), das angepasst ist, um in den Leiter (2) einzugreifen.

9. Abscherschraube nach Anspruch 8, **dadurch gekennzeichnet, dass** das Eingriffselement (14) und das Kontaktelement (15) in 25 Stufen angeordnet sind, wobei der Durchmesser des Eingriffselements (D_{E}) kleiner ist als der Durchmesser des Kontaktelements (D_{C}).

10. Abscherschraube nach einem der vorhergehenden Ansprüche, **dadurch gekennzeichnet, dass** durch das Druckstück (7) auf den Schraubenkopf (9) beim Einschrauben des Gewindeabschnitts (5) in das Verbindungselement (3), insbesondere durch das Zusammenwirken von Klemmelement (12) und Bolzen (11), eine Auftriebskraft (F_{U}) erzeugbar ist.

11. Abscherschraube nach einem der vorhergehenden Ansprüche, **dadurch gekennzeichnet, dass** die Innenseite des Gewindeabschnitts (5) Profilierungen (16) aufweist.

## Revendications

1. Vis à cisaillement, servant à fixer un conducteur (2) d'un câble électrique dans un élément de connexion (3), avec une portion filetée cylindrique creuse (5), dans laquelle le cisaillement intervient lorsqu'un couple (T) prédéterminé est dépassé, et une pièce de pression (7) agencée à l'intérieur de la portion filetée (5),
dans laquelle la pièce de pression (7) a une longueur de dépassement axiale (AL) par rapport à la portion filetée (5),
**caractérisée en ce que**
la pièce de pression (7) est constituée d'au moins deux parties : un plongeur (11) et un élément de serrage (12) .

2. Vis à cisaillement selon la revendication 1, **caractérisée en ce que** la portion filetée (5) a au moins partiellement un filetage externe.

3. Vis à cisaillement selon l'une des revendications précédentes, **caractérisée en ce que** la portion filetée (5) est formée à la manière d'un manchon fileté à paroi mince.

4. Vis à cisaillement selon l'une des revendications précédentes, **caractérisée en ce que** la portion filetée (5) est formée d'un seul tenant avec une tête de vis (9), par l'intermédiaire de laquelle la vis (1) est vissée dans l'élément de connexion (3).

5. Vis à cisaillement selon l'une quelconque des revendications précédentes, **caractérisée en ce que** la pièce de pression (7), en particulier le plongeur (11), est conçu en tant qu'un cylindre, en particulier un cylindre creux.

6. Vis à cisaillement selon l'une quelconque des revendications précédentes, **caractérisée en ce que** l'élément de serrage (12) peut être agencé au moins partiellement entre le conducteur (2) et la portion filetée (5).

7. Vis à cisaillement selon l'une quelconque des revendications précédentes, **caractérisée en ce que**, avant de visser la vis (1) dans l'élément de connexion (3), il existe un espacement (13) entre le dessous de la portion filetée (5) et l'élément de serrage (12).

8. Vis à cisaillement selon l'une quelconque des revendications précédentes, **caractérisée en ce que** l'élément de serrage (12) est formé à la manière d'un capuchon, avec un élément de mise en prise (14) apte à se mettre en prise avec l'intérieur de la portion filetée (5) et un élément de contact (15) apte à se mettre en prise avec le conducteur (2).

9. Vis à cisaillement selon la revendication 8, **caractérisée en ce que** l'élément de mise en prise (14) et l'élément de contact (15) sont agencés en 25 pas, dans lequel le diamètre de l'élément de mise en prise (D_{E}) est inférieur au diamètre de l'élément de contact (D_{C}) .

10. Vis à cisaillement selon l'une des revendications précédentes, **caractérisée en ce qu'**une force ascendante (F_{U}) peut être générée par la pièce de pression (7) sur la tête de vis (9) lorsque la portion filetée (5) est vissée dans l'élément de connexion (3), en particulier par l'interaction de l'élément de serrage (12) et du plongeur (11).

11. Vis à cisaillement selon l'une des revendications précédentes, **caractérisée en ce que** l'intérieur de la portion filetée (5) a des profils (16).
